# FASCICULE DE BREVET EUROPEEN

(11) **EP 2 113 677 B1**
(45) Date de publication et mention de la délivrance du brevet: **01.01.2014**
(21) Numéro de dépôt: 09005346.3
(22) Date de dépôt: 15.04.2009
(51) Int. Cl.: F16F 7/12

(54) **Elément absorbant d'énergie**
Energieabsorbierendes Element
Energy absorbing element

(30) Priorité: 28.04.2008 FR 0802366
(43) Date de publication de la demande: 04.11.2009
(73) Titulaire: EUROCOPTER, 13725 Marignane Cédex (FR)
(72) Inventeur: Honnorat, Olivier, 13090 Aix-en-Provence (FR); Manfredotti, Thomas, 06480 La Colle sur Loup (FR)
(74) Mandataire: GPI & Associés

(56) Documents cités:
- EP-A- 0 927 659
- US-A- 3 447 833
- US-A- 3 482 872

## Description

La présente invention concerne un élément absorbant d'énergie.

En effet, pour dissiper de l'énergie, de l'énergie cinétique d'un siège d'hélicoptère lors d'un atterrissage à vitesse rapide par exemple, il convient d'utiliser au moins un élément absorbant.

Par exemple, on connaît par le document US 3482872 un élément absorbant muni d'une portion absorbante comportant un unique élément filiforme absorbant selon le préambule de la revendication 1.

A contrario, le document US 3447833 présente un élément absorbant muni d'une portion absorbante solidaire d'un premier et d'un deuxième moyens d'ancrage à un sol.

La portion absorbante comporte alors un premier et un deuxième élément filiforme, le premier élément filiforme étant solidarisé par une de ses extrémités au premier moyen d'ancrage et par son autre extrémité au deuxième élément filiforme. De même, le deuxième élément filiforme est solidarisé par une de ses extrémités au deuxième moyen d'ancrage et par son autre extrémité au premier élément filiforme.

On connaît par le document FR2695177 un élément absorbant comportant d'une part une succession de mailles fermées susceptibles d'être déformées plastiquement selon une direction sensiblement perpendiculaire à leur orientation initiale pour s'ouvrir progressivement en fonction de l'effort de traction appliqué, et d'autre part, des moyens d'accrochage, à une extrémité, à un point d'ancrage fixe et, à l'extrémité opposée, à un point d'ancrage mobile.

La déformation plastique de l'élément absorbant permet alors d'absorber l'énergie générée par le phénomène à l'origine de la traction.

Afin d'obtenir les mailles de l'élément absorbant, des découpes ménagées dans une plaque rectangulaire sont réparties pour former une succession de rangées parallèles entre elles et perpendiculaires à l'axe longitudinal de la plaque.

Une rangée sur deux comprend alors une découpe centrale ménageant, avec les bords de la plaque, une portion de plaque pleine représentant une maille fermée. Les autres rangées comprennent alors deux découpes latérales comportant chacune, d'une part, une extrémité ouverte débouchant sur le bord correspondant de ladite plaque et, d'autre part, une extrémité fermée semi-circulaire ménageant avec les découpes adjacentes des portions de plaque pleine. Les découpes latérales d'une rangée séparent alors deux mailles fermées adjacentes.

Bien qu'efficace, on note que la forme semi-circulaire des extrémités fermées des découpes génère des variations de section de l'élément absorbant.

On peut alors observer de grandes concentrations de contraintes aux variations de section susceptibles de conduire à la rupture de l'élément absorbant.

Par suite, cet élément absorbant peut donc être difficilement implémenté sur un siège anti-écrasement d'un hélicoptère, dénommé aussi communément siège anti-crash, compte tenu des efforts subis lors du crash d'un véhicule, particulièrement un aéronef du type giravion.

Une solution pourrait consister en un renfort des zones fragilisées. Toutefois, cette solution induirait un surcoût financier.

La présente invention a alors pour objet de proposer un élément absorbant suffisamment résistant pour pouvoir être implémenté sur un siège antl-écrasement à un coût financier raisonnable.

Selon l'invention, telle que définie par la revendication 1, un élément absorbant d'énergie est muni d'une portion absorbante, d'un premier point d'ancrage et d'un deuxième point d'ancrage, une première et une deuxième extrémités distales de la partie absorbante étant respectivement solidarisées aux premier et deuxième points d'ancrage. De plus, la portion absorbante comporte au moins un élément filiforme solide, optionnellement d'épaisseur constante, se déformant élastiquement lors d'une sollicitation en traction inférieure à un seuil prédéterminé et plastiquement lors d'une sollicitation en traction supérieure à ce seuil prédéterminé, cet au moins un élément filiforme étant muni d'une succession de segments droits sensiblement parallèles entre eux et de segments en arc de cercle de manière à avoir au moins deux segments droits successifs reliés par un segment en arc de cercle.

Les première et deuxième extrémités distales comprennent chacune un segment droit ce qui facilite leur solidarisation aux premier et deuxième points d'ancrage.

Pour optimiser l'efficacité de l'élément absorbant, cet élément absorbant comporte non pas un mais deux éléments filiformes en vis-à-vis reliés uniquement via leurs segments droits de leurs zones extrémales.

Chaque élément filiforme ayant un segment droit primaire à sa première zone extrémale ainsi qu'un segment droit secondaire à sa deuxième zone extrémale, les premier et deuxième éléments filiformes sont reliés uniquement via leurs zones extrémales de manière à former les première et deuxième extrémités distales de la portion absorbante.

Ainsi, le segment droit primaire du premier élément filiforme est solidarisé au segment droit primaire du deuxième l'élément filiforme pour former la première extrémité distale de la portion absorbante, ces segments droits primaires formant en fait un seul et unique segment droit auquel est solidarisé le premier point d'ancrage.

De même, le segment droit secondaire du premier élément filiforme est solidarisé au segment droit secondaire du deuxième élément filiforme pour former la deuxième extrémité distale de la portion absorbante, ces segments droits secondaires formant en fait un seul et unique segment droit auquel est solidarisé le deuxième point d'ancrage.

Lorsque l'on tire sur le deuxième point d'ancrage, chaque segment en arc de cercle tend à se déplier en étant déformé élastiquement ou plastiquement, cette déformation élastique ou plastique lui conférant un pouvoir d'absorption d'énergie.

Par définition, l'élément filiforme de la portion absorbante de l'élément absorbant a une forme très allongée par rapport à sa dimension transverse, la longueur développée de chaque élément filiforme étant très supérieure à son épaisseur. Ainsi, l'élément filiforme peut être un fil, ayant une section de forme diverse et non pas nécessairement circulaire. De plus, l'élément filiforme comporte avantageusement un matériau métallique de manière à présenter des caractéristiques optimales en termes de déformations élastique et plastique.

Par ailleurs, de manière surprenante et malgré son faible coût, cet élément absorbant est particulièrement résistant ce qui autorise son implémentation dans un siège anti-crash.

Outre les caractéristiques principales et optionnelles présentées précédemment, l'élément absorbant peut comporter une ou plusieurs des caractéristiques additionnelles qui suivent.

L'élément filiforme ayant une pluralité de segments en arc de cercle présentant chacun une concavité, un premier segment en arc de cercle étant relié à un deuxième segment en arc de cercle lui succédant par un segment droit, la première concavité dudit premier segment en arc de cercle est dirigée selon une première direction opposée à une deuxième direction selon laquelle est dirigée la deuxième concavité dudit deuxième segment en arc de cercle.

Ainsi, l'élément filiforme a une forme onduleuse, sinueuse, de manière à former un serpentin, Cette caractéristique favorise l'allongement de l'élément absorbant ce qui maximise son pouvoir absorbant.

Par ailleurs, chaque segment en arc de cercle a éventuellement une forme de demi-cercle régulier et/ou un rayon supérieur ou égal à deux millimètres. Pour l'homme du métier, un rayon supérieur ou égal à deux millimètres revient à dire que chaque segment en arc de cercle représente une partie de la périphérie d'un cercle fictif d'un rayon supérieur ou égal à deux millimètres.

Ainsi, l'élément filiforme ne présentera pas de concentrations Importantes de contraintes et ne risquera donc pas de casser indûment.

En outre, chaque élément filiforme ayant des segments droits intermédiaires identiques d'une première longueur entre ses segments droits primaire et secondaire, les segments droits primaire et secondaire étant identiques et ayant une deuxième longueur, la deuxième longueur est supérieure à la première longueur.

On comprend que chaque élément filiforme comporte une pluralité de segments droits, le segment droit de la première zone extrémale d'un élément filiforme étant appelé segment droit primaire, le segment droit de la deuxième zone extrémale d'un élément filiforme étant appelé segment droit secondaire, et les segments droits se trouvant entre le segment droit de la première zone extrémale et le segment droit de la deuxième zone extrémale étant appelés segments droits intermédiaires dans un souci de clarté.

Par suite, la première longueur des segments droits se trouvant entre le segment droit de la première zone extrémale et le segment droit de la deuxième zone extrémale est inférieure à la deuxième longueur des segments droits des première et deuxième zones extrémales.

Ainsi, chaque segment en arc de cercle du deuxième élément filiforme est séparé de chaque segment en arc de cercle du premier élément filiforme de manière à ne pas les toucher pour favoriser la capacité d'allongement en traction de l'élément absorbant.

De plus, les premier et deuxième éléments filiformes étant identiques et disposés en vis-à-vis, chaque segment droit du deuxième élément filiforme se trouve dans le prolongement d'un segment droit du premier élément filiforme, les segments droits intermédiaires du premier élément filiforme étant séparés des segments droits intermédiaires du deuxième élément filiforme de manière à ne pas les toucher.

Enfin, il est avantageux d'avoir un élément absorbant monobloc, le ou les élément(s) filiforme(s) de l'élément absorbant ainsi que les premier et deuxième points d'ancrage étant obtenus par l'usinage d'un même bloc de matière.

De plus, la partie absorbante étant idéalement contenu dans un plan de manière à travailler dans une direction privilégiée pour maximiser son efficacité, ledit bloc de matière se présente sous la forme d'une plaque plane.

Par conséquent, l'élément absorbant, et donc sa portion absorbante ainsi que chacun des ses éléments filiformes, fabriqués à partir de ladite plaque plane seront contenus dans un même plan.

Le coût de fabrication de l'élément absorbant est ainsi relativement faible alors que les performances de cet élément absorbant sont optimisées.

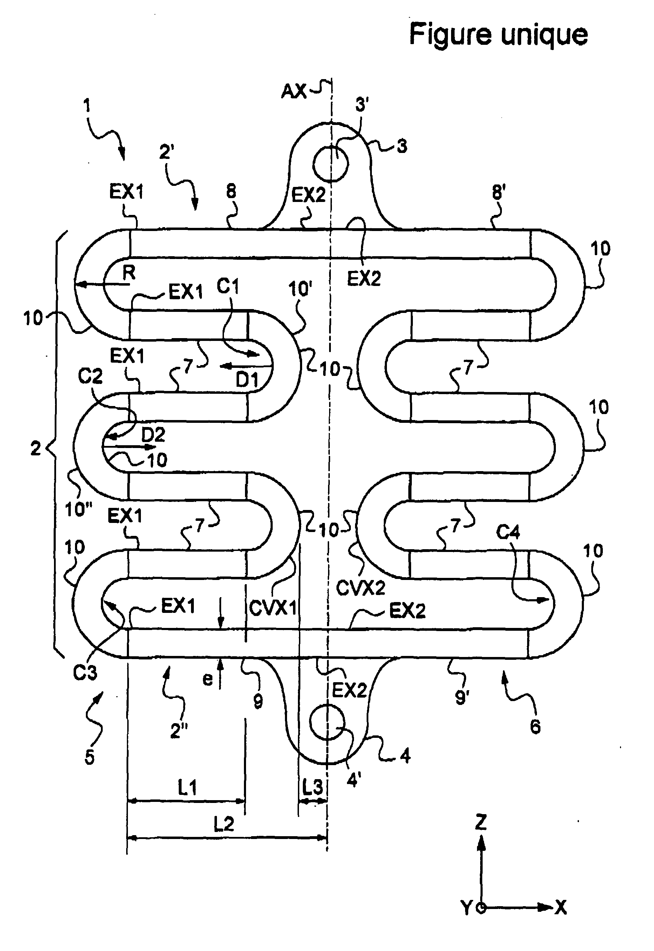

L'invention et ses avantages apparaîtront avec plus de détails dans le cadre de la description qui suit avec un exemple de réalisation donné à titre illustratif en référence à l'unique figure annexée.

On note que trois directions X, Y et Z orthogonales les unes par rapport aux autres sont représentées sur cette figure.

La direction X est dite longitudinale alors qu'une autre direction Y est dite transversale.

Enfin, une troisième direction Z est dite d'élévation et correspond aux dimensions en hauteur des structures décrites.

L'unique figure présente une vue de face d'un élément absorbant 1 plan selon l'invention.

Cet élément absorbant comporte successivement un premier point d'ancrage 3, une portion absorbante 2 puis un deuxième point d'ancrage 4. En effet, on constate que la première extrémité distale 2' de la portion absorbante 2 est solidarisée au premier point d'ancrage 3, alors que la deuxième extrémité distale 2" de cette portion absorbante 2 est solidarisée au deuxième point d'ancrage 4.

On note que les premier et deuxième points d'ancrage 3, 4, munis chacun d'un orifice de fixation 3', 4', ainsi que la portion absorbante 2 peuvent constituer une seule et même pièce en provenant de l'usinage d'un unique bloc de matière, la découpe d'une plaque plane métallique par exemple.

En tirant sur le deuxième point d'ancrage 4, et en maintenant fixement le premier point d'ancrage 3, on exerce une traction sur la portion absorbante. Cette traction peut être initiée par la descente de la structure d'un siège, dit « baquet », d'hélicoptère lors d'un atterrissage à grande vitesse de cet hélicoptère.

La portion absorbante 2 se déforme alors d'abord élastiquement puis plastiquement de manière à absorber l'énergie cinétique du baquet pour ralentir et amoindrir la descente de ce baquet.

En premier lieu, la portion absorbante comporte un premier élément filiforme 5 d'épaisseur constante e, tel qu'un fil, muni de six segments droits 7, 8, 9 parallèles entre eux, dirigés selon la direction longitudinale X, et de cinq segments en arc de cercle 10.

On comprend que les nombres de segments droits et en arc de cercle évoqués ci-dessus sont purement indicatifs et donc pas limitatifs. Au minimum, le premier élément filiforme comprend deux segments droits reliés par un segment en arc de cercle.

Le premier élément filiforme comporte donc une succession de segments droits et de segments en arc de cercle, un segment droit 7, 8, 9 succédant et/ou précédant un segment en arc de cercle 10, et un segment en arc de cercle 10 succédant et/ou précédant un segment droit 7, 8, 9.

Plus précisément la première zone extrémale 2' de l'élément absorbant 1, et de fait la première zone extrémale 2' du premier élément filiforme 5, est pourvue d'un segment droit dénommé segment primaire 8.

De même, la deuxième zone extrémale 2" de l'élément absorbant 1, et de fait la deuxième extrémité distale 2" du premier élément filiforme 5, est pourvue d'un segment droit dénommé segment secondaire 9.

Les segments droit primaire 8 et secondaire 9 sont identiques et s'étendent selon une deuxième longueur L2.

Entre ces première et deuxième zones extrémales 2', 2", les segments droits sont des segments droits dénommés segments droits intermédiaires 7 s'étendant selon une première longueur L1 inférieure à la deuxième longueur L2.

Enfin, les segments droits sont disposés les uns au dessus des autres.

Par ailleurs, les segments en arc de cercle 10 sont tous identiques et présentent une forme de demi-cercle régulier d'un rayon R supérieur à deux millimètres.

On note que la différence entre la deuxième longueur L2 et la première longueur L1 est supérieure à ce rayon R ce qui implique que les extrémités internes EX2 des segments droits primaire 8 et secondaire 9 forment des saillies du premier élément filiforme 5.

De plus, les première et deuxième concavités C1, C2 de deux segments en arc de cercle 10', 10" se succédant, et donc notamment liées à un même segment droit intermédiaire, sont dirigées selon des première et deuxième directions D1, D2 parallèles et opposées, ces première et deuxième directions D1, D2 n'étant de fait pas confondues.

Le premier élément filiforme 5 a alors une forme de serpentin.

En second lieu, la portion absorbante 2 possède un deuxième élément filiforme 6. Il est à noter que ce deuxième fil 6 n'est pas obligatoire.

En référence à l'unique figure, le deuxième élément filiforme 6 est identique au premier élément filiforme 5.

En outre, le deuxième élément filiforme 6 est symétriquement solidarisé au premier élément filiforme 5 par rapport à l'axe de symétrie AX longitudinal de l'élément absorbant. Les premier et deuxième éléments filiformes 5, 6 sont alors en vis-à-vis l'un de l'autre.

Plus précisément, les premier et deuxième éléments filiformes sont solidaires l'un de l'autre uniquement via leur première et deuxième zones extrémales 2', 2". Ainsi, le segment droit primaire 8 du premier élément filiforme 5 est solidaire du segment droit primaire 8' du deuxième élément filiforme 6, le segment droit secondaire 9 du premier élément filiforme 5 étant solidaire du segment droit secondaire 9' du deuxième élément filiforme 6.

En raison de la symétrie des premier et deuxième éléments filiformes 5, 6, chaque segment droit du deuxième élément filiforme 6 est aligné avec un segment droit du premier élément filiforme 5.

De même, chaque segment en arc de cercle du deuxième élément filiforme 6 se trouve dans l'alignement d'un segment en arc de cercle du premier élément filiforme 5, sans néanmoins le toucher.

Ainsi, chaque segment en arc de cercle externe du premier élément filiforme 5, se trouvant à une deuxième longueur L2 de l'axe de symétrie AX, ont leur concavité en regard de la concavité d'un segment en arc de cercle externe du deuxième élément filiforme 6, se trouvant à une deuxième longueur L2 de l'axe de symétrie AX. A titre d'exemple, les concavités C3, C4 sont donc en regard l'une de l'autre.

De plus, deux segments en arc de cercle externe alignés des premier et deuxième éléments filiformes 5, 6 sont séparés par une distance correspondant à deux fois la deuxième longueur L2, à savoir la somme des deuxièmes longueurs L2 des segments droits primaire 8, 8' ou secondaire 9 , 9'.

A contrario, chaque segment en arc de cercle interne du premier élément filiforme 5, se trouvant à une troisième longueur L3 de l'axe de symétrie AX égale à la deuxième longueur L2 moins le rayon R et la première longueur L1, ont leur convexité en regard de la convexité d'un segment en arc de cercle externe du deuxième élément filiforme 6, se trouvant à une troisième longueur L3 de l'axe de symétrie AX égale à la deuxième distance moins le rayon R et la première longueur L1. A titre d'exemple, les convexités CVX1, CVX2 sont donc en regard l'une de l'autre.

De plus, deux segments en arc de cercle, internes et alignés, des premier et deuxième éléments filiformes 5, 6 sont séparés par une distance correspondant à deux fois la troisième longueur L3.

On note qu'il est possible d'implémenter en série ou en parallèle plusieurs éléments absorbants sur un même équipement, un siège par exemple, pour adapter les caractéristiques d'absorption de l'ensemble.

En série, les éléments absorbants seront disposés les uns au-dessus des autres, le premier point d'ancrage d'un élément absorbant étant fixé au deuxième point d'ancrage de l'élément absorbant se trouvant au dessus de lui par exemple.

A contrario, en parallèle, les éléments absorbants seront agencés les uns contre les autres, les premiers points d'ancrage de chaque élément absorbant étant par exemple traversés par un premier moyen d'ancrage dudit équipement, alors que les deuxièmes points d'ancrage de chaque élément absorbant sont traversés par un deuxième moyen d'ancrage de cet équipement.

## Revendications

1. Elément absorbant (1) d'énergie muni d'une portion absorbante (2), d'un premier point d'ancrage (3) et d'un deuxième point d'ancrage (4), une première et une deuxième extrémités distales (2', 2") de ladite partie absorbante (2) étant respectivement solidarisées aux premier et deuxième points d'ancrage (3, 4),
ladite portion absorbante (2) comportant deux éléments filiformes (5, 6) solides se déformant élastiquement lors d'une sollicitation en traction inférieure à un seuil prédéterminé et plastiquement lors d'une sollicitation en traction supérieure audit seuil prédéterminé, chaque élément filiforme (5, 6) étant muni d'une succession de segments droits (7, 8, 8', 9, 9') sensiblement parallèles entre eux et de segments en arc de cercle (10) de manière à avoir au moins deux segments droits successifs reliés par un segment en arc de cercle (10), lesdits premier et deuxième éléments filiformes (5, 6) étant en vis-à-vis, chaque élément filiforme ayant un segment droit primaire (8, 8') à sa première zone extrémale (2') ainsi qu'un segment droit secondaire (9, 9') à sa deuxième zone extrémale (2") les premier et deuxième éléments filiformes (5, 6) sont reliés uniquement via leur zone extrémale (2', 2"),
ledit segment droit primaire (8) du premier élément filiforme (5) étant solidarisé au segment droit primaire (8') du deuxième élément filiforme (6) pour former la première extrémité distale de la portion absorbante alors que ledit segment droit secondaire (9) du premier élément filiforme (5) est solidarisé au segment droit secondaire (9') du deuxième élément filiforme (6) pour former la deuxième extrémité distale de la portion absorbante, **caractérisé en ce que** ledit deuxième élément filiforme (6) étant symétriquement solidarisé au premier élément filiforme (5) par rapport à un axe de symétrie longitudinal (AX) de l'élément absorbant.

2. Elément absorbant d'énergie selon la revendication 1, **caractérisé en ce que** ledit élément filiforme (5, 6) est un fil.

3. Elément absorbant d'énergie selon l'une quelconque des revendications précédentes,
**caractérisé en ce que**, ledit élément filiforme (5, 6) ayant une pluralité de segments en arc de cercle (10) présentant chacun une concavité, un premier segment en arc de cercle (10') étant relié à un deuxième segment en arc de cercle (10") lui succédant par un segment droit (7), la première concavité (C1) dudit premier segment en arc de cercle (10') est dirigée selon une première direction (D1) opposée à une deuxième direction (D2) selon laquelle est dirigée la deuxième concavité (C2) dudit deuxième segment en arc de cercle (10").

4. Elément absorbant d'énergie selon l'une quelconque des revendications précédentes,
**caractérisé en ce que** chaque segment en arc de cercle (10) a un rayon (R) supérieur ou égal à deux millimètres.

5. Elément absorbant d'énergie selon l'une quelconque des revendications précédentes,
**caractérisé en ce que**, chaque élément filiforme (5, 6) ayant des segments droits intermédiaires (7) identiques d'une première longueur (L1) entre ses segments droits primaire (8, 8') et secondaire (9, 9'), les segments droits primaires (8, 8') et secondaires (9, '9) étant identiques et ayant une deuxième longueur (L2), ladite deuxième longueur (L2) est supérieure à ladite première longueur (L1).

6. Elément absorbant d'énergie selon l'une quelconque des revendications précédentes,
**caractérisé en ce que** chaque segment droit du deuxième élément filiforme (6) se trouve dans le prolongement d'un segment droit du premier élément filiforme (5), lesdits segments droits intermédiaires (7) du premier élément filiforme (5) étant séparés desdits segments droits intermédiaires (7) du deuxième élément filiforme (6).

7. Elément absorbant d'énergie selon l'une quelconque des revendications précédentes,
**caractérisé en ce que** chaque segment en arc de cercle (10) du deuxième élément filiforme (6) est séparé de chaque segment en arc de cercle (10) du premier élément filiforme (5).

8. Elément absorbant selon l'une quelconque des revendications précédentes,
**caractérisé en ce que** ledit élément absorbant est monobloc, ledit au moins un élément filiforme (5, 6), lesdits premier et deuxième points d'ancrage (3, 4) étant obtenus par l'usinage d'un même bloc de matière.

9. Elément absorbant selon l'une quelconque des revendications précédentes,
**caractérisé en ce que** ledit au moins un élément filiforme (5, 6) a une épaisseur constante.

10. Elément absorbant selon l'une quelconque des revendications précédentes,
**caractérisé en ce que** chaque segment en arc de cercle (10) à une forme de demi-cercle régulier.

11. Elément absorbant selon l'une quelconque des revendications précédentes,
**caractérisé en ce que** ladite partie absorbante (2) est contenue dans un plan.

12. Elément absorbant selon l'une quelconque des revendications précédentes,
**caractérisé en ce que** le deuxième élément filiforme (6) est symétriquement solidarisé au premier élément filiforme (5) par rapport à un axe de symétrie (AX) longitudinal de l'élément absorbant (1).

## Patentansprüche

1. Energieabsorbierendes Element (1) mit einem absorbierenden Bereich (2), einem ersten Verankerungspunkt (3) und einem zweiten Verankerungspunkt (4), einem ersten und einem zweiten distalen Ende (2', 2") des absorbierenden Bereichs (2), die jeweils an dem ersten bzw. zweiten Verankerungspunkt (3, 4) befestigt sind, wobei der absorbierende Bereich (2) zwei fadenförmige stabile Elemente (5, 6) aufweist, die sich bei einer Zugbeanspruchung unterhalb eines vorbestimmten Schwellenwertes elastisch verformen und die sich bei einer Zugbeanspruchung oberhalb dieses vorbestimmten Schwellenwertes plastisch verformen, wobei jedes fadenförmige Element (5, 6) mit einer Aufeinanderfolge von graden Abschnitten (7, 8, 8', 9, 9') versehen ist, die im Wesentlichen parallel zueinander sind, und mit kreisbogenförmigen Abschnitten (10) derart, dass mindestens zwei aufeinanderfolgende gerade Abschnitte durch einen kreisbogenförmigen Abschnitt (10) verbunden sind, wobei sich das erste und das zweite fadenförmige Element (5, 6) gegenüberliegen, wobei jedes fadenförmige Element einen primären geraden Abschnitt (8, 8') in seinem ersten Endbereich (2') aufweist sowie einen sekundären geraden Abschnitt (9, 9') in seinem zweiten Endbereich (2"), wobei das erste und das zweite fadenförmige Element (5, 6) nur über ihren Endbereich (2', 2") verbunden sind, wobei der primäre gerade Bereich (8) des ersten fadenförmigen Elements (5) an dem primären geraden Abschnitt (8') des zweiten fadenförmigen Elements (6) befestigt ist, um das erste distale Ende des absorbierenden Bereichs zu bilden, während der sekundäre gerade Abschnitt (9) des ersten fadenförmigen Elements (5) an dem sekundären geraden Bereich (9') des zweiten fadenförmigen Elements (6) befestigt ist, um das zweite distale Ende des absorbierenden Bereichs zu bilden,
**dadurch gekennzeichnet, dass** das zweite fadenförmige Element (6) symmetrisch zu dem ersten fadenförmigen Element (5) bezüglich einer Längssymmetrieachse (AX) des absorbierenden Elements befestigt ist.

2. Energieabsorbierendes Element nach Anspruch 1,
**dadurch gekennzeichnet, dass** das fadenförmige Element (5, 6) ein Draht ist.

3. Energieabsorbierendes Element nach einem der vorstehenden Ansprüche,
**dadurch gekennzeichnet, dass** das fadenförmige Element (5, 6), welches eine Mehrzahl von kreisbogenförmigen Abschnitten (10) aufweist, die jeweils eine Konkavität bilden, wobei ein erster kreisbogenförmigen Abschnitt (10') über einen geraden Abschnitt (7) mit einem zweiten, auf ihn folgenden kreisbogenförmigen Abschnitt (10") verbunden ist, wobei die erste Konkavität (C1) des ersten kreisbogenförmigen Abschnitts (10') in eine erste Richtung (D1) gerichtet ist, die entgegengesetzt zu einer zweiten Richtung (D2) ist, in die die zweite Konkavität (C2) des zweiten kreisbogenförmigen Abschnitt (10") gerichtet ist.

4. Energieabsorbierendes Element nach einem der vorstehenden Ansprüche,
**dadurch gekennzeichnet, dass** jeder kreisbogenförmige Abschnitt (10) einen Radius (R) aufweist, der größer oder gleich zwei Millimetern ist.

5. Energieabsorbierendes Element nach einem der vorstehenden Ansprüche,
**dadurch gekennzeichnet, dass** jedes fadenförmige Element (5, 6) identische gerade Zwischenabschnitte (7) aufweist, mit einer ersten Länge (L1), die zwischen den primären geraden Abschnitten (8, 8') und den sekundären Abschnitten (9, 9') angeordnet sind, wobei die primären (8, 8') und sekundären (9, 9') geraden Abschnitte identisch sind und eine zweite Länge (L2) aufweisen, wobei die zweite Länge (L2) größer ist als die erste Länge (L1).

6. Energieabsorbierendes Element nach einem der vorstehenden Ansprüche,
**dadurch gekennzeichnet, dass** jeder gerade Abschnitt des zweiten fadenförmigen Elements (6) sich in der Verlängerung eines geraden Abschnitts des ersten fadenförmigen Elements (5) befindet, wobei die geraden Zwischenabschnitte (7) des ersten fadenförmigen Elements (5) von den geraden Zwischenabschnitten (7) des zweiten fadenförmigen Elements (6) getrennt sind.

7. Energieabsorbierendes Element nach einem der vorstehenden Ansprüche,
**dadurch gekennzeichnet, dass** jeder kreisbogenförmige Abschnitt (10) des zweiten fadenförmigen Elements (6) von jedem kreisbogenförmigen Element (10) des ersten fadenförmigen Elements (5) getrennt ist.

8. Energieabsorbierendes Element nach einem der vorstehenden Ansprüche,
**dadurch gekennzeichnet, dass** das absorbierende Element einstückig ist, wobei das mindestens eine fadenförmige Element (5, 6) und der erste und der zweite Verankerungspunkt (3, 4) durch spanende Verarbeitung aus ein und demselben Materialblock erhalten sind.

9. Energieabsorbierendes Element nach einem der vorstehenden Ansprüche,
**dadurch gekennzeichnet, dass** das mindestens eine fadenförmige Element (5, 6) eine konstante Dicke aufweist.

10. Energieabsorbierendes Element nach einem der vorstehenden Ansprüche,
**dadurch gekennzeichnet, dass** jeder kreisbogenförmige Abschnitt (10) die Form eines gleichförmigen Halbkreises aufweist.

11. Energieabsorbierendes Element nach einem der vorstehenden Ansprüche,
**dadurch gekennzeichnet, dass** der absorbierende Bereich (2) in einer Ebene enthalten ist.

12. Energieabsorbierendes Element nach einem der vorstehenden Ansprüche,
**dadurch gekennzeichnet, dass** das zweite fadenförmige Element (6) symmetrisch bezüglich einer Längssymmetrieachse (AX) des absorbierenden Elements (1) an dem ersten fadenförmigen Element (5) befestigt ist.

## Claims

1. Energy absorbing element (1) provided with an absorbing portion (2), a first anchor point (3) and a second anchor point (4), a first and a second distal end (2', 2") of said absorbing portion (2) being secured respectively to the first and second anchor points (3, 4), said absorbing portion (2) comprising two solid filiform elements (5, 6) which deform elastically when subjected to traction below a predetermined threshold and plastically when subjected to traction above said predetermined threshold, each filiform element (5, 6) being provided with a succession of straight segments (7, 8, 8', 9, 9') substantially parallel to one another and of circular-arc segments (10) so as to have at least two successive straight segments connected by a circular-arc segment (10), said first and second filiform elements (5, 6) facing each other, each filiform element having a primary straight segment (8, 8') at its first end zone (2') and a secondary straight segment (9, 9') at its second end zone (2"), the first and second filiform elements (5, 6) are connected solely via their end zones (2', 2"), said primary straight segment (8) of the first filiform element (5) being secured to the primary straight segment (8') of the second filiform element (6) to form the first distal end of the absorbing portion, while said secondary straight segment (9) of the first filiform element (5) is secured to the secondary straight segment (9') of the second filiform element (6) to form the second distal end of the absorbing portion, **characterised in that** said second filiform element (6) being symmetrically secured to the first filiform element (5) about a longitudinal axis of symmetry (AX) of the absorbing element.

2. Energy absorbing element according to Claim 1, **characterised in that** said filiform element (5, 6) is a wire.

3. Energy absorbing element according to any one of the preceding claims,
**characterised in that**, for said filiform element (5, 6) having a plurality of circular-arc segments (10), each possessing a concavity, a first circular-arc segment (10') being connected to a second circular-arc segment (10") which follows it by means of a straight segment (7), the first concavity (C1) of said first circular-arc segment (10') is directed in a first direction (D1) opposite to a second direction (D2) in which the second concavity (C2) of said second circular-arc segment (10") is directed.

4. Energy absorbing element according to any one of the preceding claims,
**characterised in that** each circular-arc segment (10) has a radius (R) greater than or equal to two millimetres.

5. Energy absorbing element according to any one of the preceding claims,
**characterised in that**, for each filiform element (5, 6) having identical intermediate straight segments (7) of a first length (L1) between its primary (8, 8') and secondary (9, 9') straight segments, the primary (8, 8') and secondary (9, 9') straight segments being identical and having a second length (L2), said second length (L2) is greater than said first length (L1).

6. Energy absorbing element according to any one of the preceding claims,
**characterised in that** each straight segment of the second filiform element (6) is in alignment with a straight segment of the first filiform element (5), said intermediate straight segments (7) of the first filiform element (5) being spaced apart from said intermediate straight segments (7) of the second filiform element (6).

7. Energy absorbing element according to any one of the preceding claims,
**characterised in that** each circular-arc segment (10) of the second filiform element (6) is spaced apart from each circular-arc segment (10) of the first filiform element (5).

8. Absorbing element according to any one of the preceding claims,
**characterised in that** said absorbing element consists of a single piece, said at least one filiform element (5, 6), said first and second anchor points (3, 4) being obtained by machining the same block of material.

9. Absorbing element according to any one of the preceding claims,
**characterised in that** said at least one filiform element (5, 6) has a constant thickness.

10. Absorbing element according to any one of the preceding claims,
**characterised in that** each circular-arc segment (10) is in the form of a regular semicircle.

11. Absorbing element according to any one of the preceding claims,
**characterised in that** said absorbing portion (2) is contained in a plane.

12. Absorbing element according to any one of the preceding claims,
**characterised in that** the second filiform element (6) is symmetrically secured to the first filiform element (5) about a longitudinal axis of symmetry (AX) of the absorbing element (1) .
